# EUROPEAN PATENT APPLICATION

(11) **EP 2 204 703 A1**
(43) Date of publication of application: **07.07.2010**
(21) Application number: 08022403.3
(22) Date of filing: 23.12.2008
(51) Int. Cl.: G05B 19/042

(54) **Method for improved operating of an industrial automation system and corresponding devices**

(71) Applicant: Siemens Aktiengesellschaft, 80333 München (DE)
(72) Inventor: Gerdes, Christoph, 81667 München (DE)

(57) **Abstract**

The present invention relates to an improved operating of industrial automation systems, in particular, to providing of operation data in industrial automation systems required for operating a device of an industrial automation system. In particular, a querying mechanism is established in devices of an automation system, by use of which queries for obtaining operation data are processed and by use of which at least one data providing device in said automation system, capable of providing the desired operation data, is determined. The present invention enables a flexible and cost-saving operating of industrial automation systems and allows a flexible execution of control mechanisms configured for controlling the industrial automation systems.

## Description

### FIELD OF THE INVENTION

The present invention relates to a method for improved operating of industrial automation systems, in particular, to providing of operation data in industrial automation systems required for operating of a device of an industrial automation system.

### BACKGROUND OF THE INVENTION

Industrial automation systems are inherently complex due to the richness of features of individual devices comprised and exploited in the industrial automation systems. These devices have to be integrated and operated correctly in the corresponding industrial automation systems. The integration and/or operation of the devices comprises, for example, correct parameterization, configuration, connection (with other devices), and/or correct ensuring of their interactions in the corresponding industrial automation system. Such integration and/or operation of the devices in industrial automation systems are a challenging task. Hence, engineering processes are costly and error prone.

For new installations, approximately 80% of the total CAPEX (Capital Expenditure) is spent on engineering. Thereby, industrial automation systems are designed statically, by directly specifying end-to-end communications between the involved devices, e.g. a sensor "S" delivers data to a motor "M". This has as consequence that, if one of the involved devices is replaced or if other or further information units become relevant for data generated by one of the involved devices and possibly communicated in the industrial automation system, each new or amended connection has to be configured end-to-end. Thus, an enormous conglomeration of static communications links is the result of changes within the industrial automation system performed with regard to the involved devices and/or their connections or interactions. Hence, a configuration of a conventional industrial automation system is always a complex and expensive process.

Further, the static interweaving of automation equipment prevents a flexible execution of control software controlling the operation of devices and their connections or interactions. A control logic hosted on a specific device will fail to execute upon device failure, whereas in a more flexible model execution could continue to run being relocated on a backup device.

The most control functions provided in conventional industrial automation systems follow similar schemes of execution. Thus, for example, a conventional control function can comprise:
- assessment of a current state of the installation;
- applying of a control logic;
- based on the applied control logic, sending control commands to actuator equipment and continuing with the assessment of the current state provided above.

In conventional industrial automation systems, data is requested and sent between two devices, entities, or actuators, respectively, directly, yielding fixed device centric communications links. This, however, leads to complex engineering processes and inflexible maintenance in conventional industrial automation systems.

### SUMMARY OF THE INVENTION

An object of the present invention is to provide an improved operation and engineering of industrial automation systems.

This object is achieved by a method comprising features according to claim 1, a computer program product comprising features according to claim 9, a data carrier comprising features according to claim 10, a device comprising features according to claim 11, and/or a data providing device comprising features according to claim 12.

Further embodiments of the present invention are provided as claimed by the corresponding dependent claims.

The object of the present invention is achieved by a method for providing operation data in an automation system, said method being performed in a device of said automation system, and said method comprising:
- processing of a query for obtaining operation data; and
- determining of at least one data providing device in said automation system capable of providing said operation data for said device.

Here, processing of a query refers in particular to composing of the query. For composing of the query, a query language can be used, for example, a declarative query language. Furthermore, the processing or composing of the query can be performed by use of predefined query templates, which are supplemented by certain more concrete parts of query like parameters, operations, statements, and/or conditions, for example, during the processing of the query. The composing of the query (and, where applicable, defining of and supplementing by more concrete parts of the query) can e.g. be based on a current situation in the automation system and/or on a state or characteristics of the device or based on required operational data.

Further, the automation system comprises a plurality of devices, which are connected to enable the operation of the automation system by performing tasks assigned to the devices in the automation system and/or by interacting with other devices to enable or support performing of the tasks assigned to the devices.

According to the present invention, the conventional statically interacting of the devices is broken up. By use of the above introduced method, the present invention provides a flexible and effective way of operating devices in an industrial automation system. In particular, the present invention provides a model, according to which a more variable and flexible connection of devices in an automation system becomes possible, wherein correct exchange, obtaining, and providing of operating data is ensured at the same time.

Operation information concerns several information or data necessary for operating of a device in the automation system. Here, measurement data, state data, and/or configuration data, for example, can be provided as operation data to the device in the automation system.

According to an embodiment of the present invention, said operation data represents data for operation of said device or said operation data represents data for operation of a requesting device in said automation system. Here, the requesting device is a device in said automation system, which requests said device for said operation data.

Thus, according to an embodiment of the present invention several devices can perform the query processing, a device, which requires the operation data for its own operation, and devices, which have several connections to further devices and which can receive operation data queries or requests from requesting devices and transmit correspondingly processed queries to devices, which can provide the requested operation data.

In this way, a flexible implementation of the present invention and a flexible and focused decision on devices in the automation system, which are appropriate to provide the requested operation data, becomes possible.

According to an embodiment of the present invention, said data providing device provides said operation data directly, e.g., by analyzing the state, the environment, and/or the device requesting said operation data.

According to a further embodiment of the present invention, said data providing device provides said operation data by transmitting a further query to at least one further device in said automation system for obtaining said operation data and by receiving said operation data from said at least one further device.

In this way, a flexible obtaining of operation data becomes possible.

According to an embodiment of the present invention, said device comprises an operation data module, said operation data module being configured to manage operation data of said device, wherein said processing of a query comprises processing of said query for obtaining operation data, which is out of date in said operation data module.

In this way, an automated and targeted provision of operation data is supported and enabled. In particular, it can be recognized whether data stored and managed by the operation data module is up to date. For example it can be recognized whether the measurements comprise current values, e.g., by checking the time of deriving or measuring of the values, or whether by checking a current state or current environment of the device is described by this data. If the data is out of date, a corresponding provision of updated operation data can be initiated by use of the query module.

According to an embodiment of the present invention, said device comprises a meta data module, said meta data module being configured to manage meta data of said device, wherein said determining is performed by use of meta data managed by said meta data module.

In this embodiment, the meta data represents general information concerning said device and can comprise, e.g., configuration data, and characteristics and/or functions of the device. By use of this data it can be determined, which further devices are connected to said device and which of these devices are actually suitable for providing the desired operation data. In this way, a flexible and intelligent deriving of the desired operation data is enabled.

According to an embodiment of the present invention, said device comprises a state data module, said state data module being configured to manage state data of said device, wherein said determining is performed by use of state data managed by said state data module.

Thus, information about the state of said device can be used to determine best fitting operation data providing devices. Hence, an accurate deriving of operation data is enabled, which is adapted to a current situation in the industrial automation system.

The object of the present invention is achieved by a computer program product comprising a code, the code being configured to implement and to perform said method.

The computer program product can be stored on a data carrier. Further, said computer program product can be configured to perform said method when said computer program product is executed by a processing unit such as a processor.

The object of the present invention is achieved by a data carrier comprising said computer program product.

The object of the present invention is achieved also by a device, said device being configured for use in an automation system, said device comprising a query module, wherein said query module is configured to process a query for obtaining operation data and to determine at least one data providing device in said automation system capable of providing said operation data.

Further, the object of the present invention is achieved by a query module or query processor, said query module being configured for use in a device of an automation system, and said query module being configured to process a query for obtaining operation data and to determine at least one data providing device in said automation system capable of providing said operation data. In particular, the query module corresponds to the query module described as comprised in the device indicated above and explained in more detail below.

Moreover, the object of the present invention is achieved by a data providing device, said data providing device being configured for use in an automation system, said data providing device comprising an operation data deriving module, said operation data deriving module being configured to derive operation data by use of a query received at said data providing device from a requesting device in said automation system, said requesting device being a device as sketched above and described in more detail below. Here, the data providing device represents a device, which is able to determine or derive the desired operation data for the requesting device. The data providing device is configured to understand, i.e., to interpret or to evaluate queries defined and processed by query modules as sketched above and described in more detail below; to derive or determine the desired operation data correctly; and to provide this derived or determined operation data to the requesting device (comprising the query module).

Thus, according to the present invention, the conventional statically interacting of the devices is broken up. By use of the above introduced method, the present invention provides a flexible and effective way of operating devices in an industrial automation system. In particular, in devices requesting operation information from further devices a query module is provided, which on the one hand is capable of defining or finding out, which data is required, and which on the other hand is capable of finding out, which devices could and would be able to provide the necessary information.

In this way, the present invention allows an improved operation of industrial automation systems.

In particular, the present invention enables a flexible and cost-saving configuration and/or reconfiguration of industrial automation systems. The present invention avoids enormous conglomerations of static communications links when changes within the industrial automation systems are performed, e.g., replacements or reconfigurations of devices involved in the industrial automation systems.

Further, the present invention allows a flexible control of operating devices in industrial automation systems.

Additionally, a simplification and increasing of efficiency of engineering processes in industrial automation systems and of maintenance of industrial automation systems is achieved by the present invention.

### BRIEF DESCRIPTION OF THE DRAWINGS

The present invention will be more clearly understood from the following description of embodiments of the present invention when read in conjunction with the attached drawings, in which:
- Fig. 1: shows an automation system as an embodiment of the present invention;
- Fig. 2: shows a device according to an embodiment of the present invention, said device being configured for use in an automation system;
- Fig. 3: shows a flow chart of an implementation of the method according to the present invention; and
- Fig. 4: shows exemplary provided devices in an automation system interacting in line with the method according to the present invention.

### DESCRIPTION OF THE EMBODIMENTS

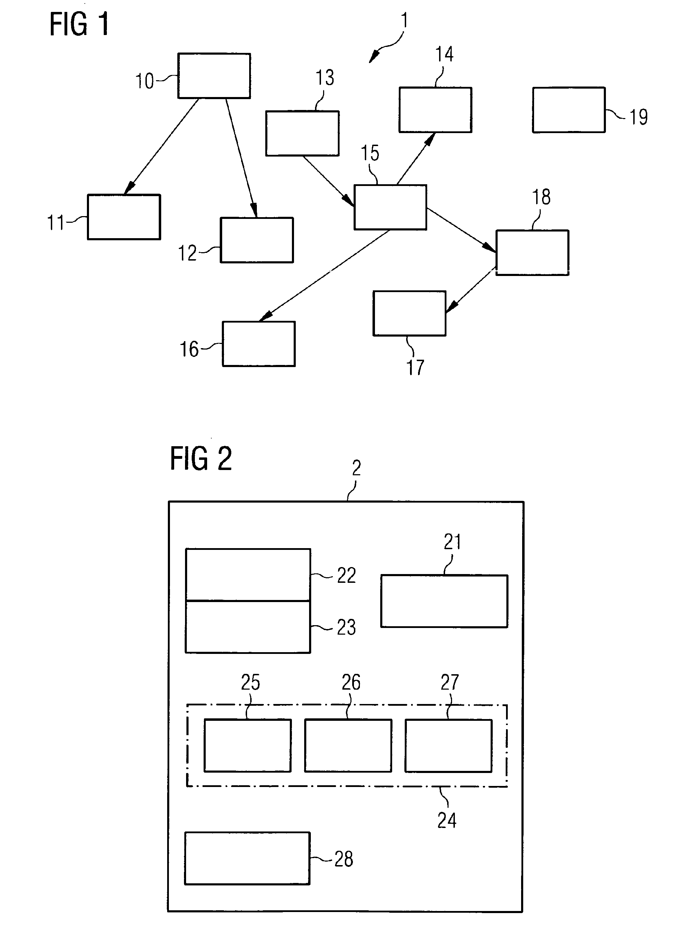

Fig. 1 shows an automation system 1 as an embodiment of the present invention in the automation system 1. The automation system 1 comprises devices 10, 11, 12, 13, 14, 15, 16, 17, 18, 19, which perform certain predefined tasks in the automation system 1 and which are interacting with each other within the automation system 1 in a predefined way. It has to be noted that Fig. 1 does not show the interactions between the devices 10, 11, 12, 13, 14, 15, 16, 17, 18, 19 in the automation system 1.

According to the exemplary embodiment shown in Fig. 1, the device 10 can request operation data from devices 11, 12 directly. This is shown by arrows between the corresponding devices 10, 11, and 12. In case that the devices 11, 12 form e.g., sensors in the automation system 1, the query module of the device 10 can determine, which of the sensors is/are more appropriate to provide desired operation data. Here, the query module of device 10 can check predetermined characteristics of the devices 11, 12 for example the kind of measurements they perform, their respective location, or the way of measuring. Further, the query module of device 10 can check its own state and the kind of currently needed operation data and can decide on or select the most appropriate sensor device 11, 12 for providing the desired data. With regard to devices 11, 12 being connected to device 10, the device 10 can comprise a listing of devices 11, 12, to which it is connected, or can determine the devices 11, 12 by use of own meta data such as configuration data.

When considering device 13 as shown in the exemplary embodiment in Fig. 1, the device 13 can request device 15 to obtain the desired operation data. Device 15, in turn, is configured to obtain operation data from devices 14, 16, 18, which represent devices according to the present invention, wherein the device 18 can in turn obtain at least some of the operation data from device 17, which represent device according to the present invention in the automation system 1 as well. Also here, the possibilities for requesting data are shown by arrows between the corresponding devices for nodes 13, 15, 14, 16, 18, and 17. Each of the requesting devices 13, 15, and 18 can comprise a list of other devices, to which the respective requesting device is connected, or can determine other devices, which are capable of providing operation data, by use of its own meta data such as configuration data.

Fig. 2 shows a block diagram of an embodiment of a device 2, which is configured for use in an automation system 1 according to an embodiment of the present invention as shown in fig. 1. Devices or nodes 10 - 19 can be formed by a device 2 as shown in the block diagram of fig. 2.

The device 2 comprises a query module 21, which is configured to process queries for obtaining operation data for the respective device 2 and/or for other devices in the automation system 1 requesting operation data.

If the device 2 is configured to obtain operation data for other devices, the requests of the other devices are processed by corresponding query modules of the other devices. Thus, the query module 21 processes new queries and corresponding data providing devices by analyzing the requests with regard to information requested by the other devices in the automation system 1. As shown in Fig. 2, the device 2 comprises a receiving module 22 configured for receiving queries or requests, respectively, from at least one requesting device.

In both cases, the way of processing the queries and of determining at least one data providing device is generally the same. Therefore, in the following, for sake of simplicity the first case, i.e. processing of queries for obtaining operation data for the device 2 itself, is described in more detail.

The query module 21 can receive an initiating message or signal from a component or module provided in the device 2, said initiating message or signal indicating the kind of operation data required.

In the second case, if a request from another device in the automation system 1 is received, the kind of operation data required is derived by analyzing the contents of the corresponding request or query, respectively.

Further, the query module 21 can get the information about the kind of required operation data also from an operation data module 25 comprised in the device 2. The operation data module 25 is configured to manage operation data of the device 2, e.g., measurement values, characterization of the environment of the device 2 etc. If the operation data module 25 determines, that a certain operation data is out of date, it can be configured to request the query module 21 for providing current operation data (e.g., current measurement of temperature etc.).

If the query module 21 has the knowledge of the kind of operation data required, the query module 21 can determine at least one data providing device capable of providing the required or requested operation data.

In a possible embodiment, the query module 21 can determine data providing devices, for example, by analyzing a set of devices stored in a memory of the device 2 and by indicating devices, which are capable of providing operation data to the device 2 in general; or by analyzing configuration data of the device 2 to obtain or to determine the data providing devices.

Then, in dependence of the kind of requested or required operation data the query module 21 can decide, which of the data providing devices is capable of providing the requested or required operation data. Thus, the device 2 can be connected to a set of sensors, each sensor being responsible to provide corresponding measurements like temperature or humidity etc. If current temperature measurements are required, the query module 21 detects such sensors as data providing devices, which, e.g., are located near to device 2 (or the requesting device) and which can perform the desired temperature measurements.

Finally, the query module 21 processes a corresponding query to the corresponding data providing device and provides the query to a transmitting module 23 in a device 2 for transmitting the query processed by the query module 21.

When determining the data providing devices, the query module 21 can be configured to analyze meta data of the device 2. This meta data can represent, for example, configuration data of the device 2. Further, this meta data can be managed by a meta data module 26 of the device 2. In this case, the query module 21 gets the meta data from the meta data module 26.

Further, when determining data providing devices, the query module 21 can be configured to analyze state data of the device 2. This state data can be managed by a state data module 27 provided in the device 2. In this case, the query module 21 receives the operation state data from the state data module 27.

The data modules 25, 26, 27 can be provided in a common data module 24, e.g., by use of data base means or module, where the common data module can represent a data base comprising several tables 25, 26, 27. Here, for example, a relational database can be used as data base means or module. Further, a separate or paired provision of the data modules 25, 26, 27 is possible.

Additionally, the device 2 can comprise an operation data deriving module 28, which is configured to derive operation data by use of a query received by the device 2 (e.g., by receiving module 22) from a requesting device in the automation system. In this embodiment, the operation data deriving module 28 can be configured to analyze the contents of the query, in particular, to derive information about the requested operation data. This information can characterize the requesting device, e.g., its location, state, configuration etc. and the kind of requested operation data.

Thus, for example, if the device 2 represents a temperature sensor, the query can comprise, for example, information about the location of the requesting device to enable the device 2 to perform the corresponding temperature measurements and information about the way of measuring. Here, for example, an average temperature over a certain time period or current temperature can be requested.

It has to be noted, that according to an embodiment of the automation system 1 the system can comprise also devices, which do not generate queries and, therefore, do not comprise query modules 21, but which are capable of providing data when receiving a query processed by a query module 21 configured according to the present invention. In such cases, such devices can comprise an operation data deriving module 28 configured to analyze contents of received queries to derive the requested operation data and to supply this data to the requesting device.

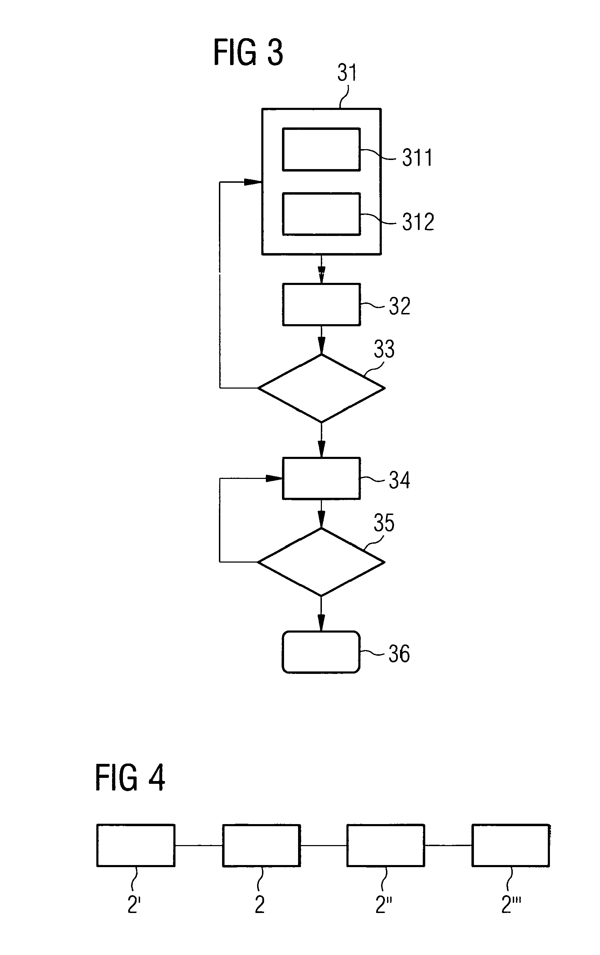

Fig. 3 shows a flow chart representing an implementation of the method according to the present invention.

In a step 31, a query as described above is processed. In particular, the step 31 comprises at least the following two sub steps: processing of a query with regard to the desired operation data in sub step 311 and determining of at least one data providing device in sub step 312. Here, it has to be noted, that a query will be processed only if the required operation data is not available at the respective device.

Then, in step 32, the processed query is transmitted to the at least one data providing device. In step 33, it is checked, whether the at least one data providing device can provide the requested operation data directly. If not, it is proceeded with step 31, where a new processing of a query and a new determining of at least one data providing device is performed by the data providing device, to which the query has been transmitted in step 32. Otherwise, the requested operating data is derived and transmitted to the requesting device in step 34. If for providing of operation data it is necessary to request several devices in the automation system 1, a checking step 35 and the transmitting step 34 are performed until the device, for which the operation data is determined, has been reached. The execution of the method according to the present invention ends in step 36.

Fig. 4 shows exemplary devices 2', 2, 2'', and 2"' in an automation system 1 interacting with each other according to the method of the present invention to obtain operation data and being arranged in the same way as device 2 shown in Fig. 2.

According to the present embodiment a data requesting device 2' processes a query according to the present invention and requests data necessary for operating of the requesting device 2'. The requesting device 2' transmits the query to the device 2. Device 2, in turn, also performs a processing of a query for obtaining the operation data and determines the device 2" as a possible data providing device capable of providing the requested data. Thus, device 2 transmits the query processed by the device 2 to the data providing device 2". The data providing device 2" detects that it has to send a query to a further device 2"' to obtain the operation data as requested. Thus, the data providing device 2" also performs a processing of a query for obtaining the operation data and transmits the processed query to the further device 2"'.

In the given example, the further device 2"' is indeed capable of providing of the requested data. Thus, it determines the requested operation data, passes this data to the data providing device 2", which in turn transmits this data to the device 2. The device 2 provides then the requested data to the requesting device 2', which requires the data for operating.

Here, it has to be noted, that Fig. 4 shows only one of many situations arising with regard to providing of operation data in an automation system 1 according to the present invention. It is not always necessary, to traverse a chain of three devices 2, 2", and 2"' to obtain the required operation data. According to the present invention, several situations of data providing can be handled. Thus, the present invention is not restricted to the embodiment of Fig. 4.

Accordingly, the present invention provides a declarative control system, which separates data from devices. In a data centric system the data itself, i.e., device meta data, measurements, as well as its non functional properties, i.e., quality, availability etc., is engineered rather than specific communication links between devices. Hence, devices 2 of automation systems 1 requiring specific data state their interest by describing in which data with which quality they are interested in, without the need to know which device will be the producer or detector of the requested operation data.

The present invention can be realized by use of indexing facilities, e.g., data bases or peer-to-peer systems, to index data like meta data descriptions; by use of a query modules or processors provided in devices of an automation system to schedule a timely delivery of data; by use of a scalable routing mechanism to actually deliver data from a source to one or more receivers; or by use of a control query language to state declarative requests for operation data.

According to the present invention, operation data can be sent either directly or through multiple nodes, i.e. devices 2 which distribute one data item to many receiving devices, as described above.

In the following, an example of a declarative query for a distributed leader election in microgrids is provided:
Detect or choose at least one data providing node M:
   M -> SELECT * FROM NODES
      WHERE microgrid = MG.ID
Detect or choose at least one data providing node, which has available capacity:
   C -> SELECT M.ID, 1, ID FROM M
      ORDER BY availability DESC LIMIT 1
Detect or choose at least one data providing node, which was available for a long time period, i.e., which had no failure for a long time period:
   V → SELECT M.ID, C.2, ID FROM M JOIN C
      ON (M.ID=C.ID)
   R → R + 1
V@C -> SELECT V.ID; COUNT(V@C.votes) + 1, ID, R FROM V@C JOIN V ON (V@C.ID = V.ID)
   L -> SELECT * FROM V@C
      WHERE V@C.R = R - 1
      ORDER BY V@C.votes DESC LIMIT 1

This program allows a distributed election of a synchronisation point (group leader) based on several criteria (in this example availability). The program consists of six rules assigning tuples to local or group variables (M, C, V, R, V@C, L), wherein M, C, V, R, L are local variables in the context of a single local query. The sign "@" indicates a global variable. Thus, for example, V@C indicates visibility for all candidates, @C indicates visibility for all nodes in the network, and @L is a variable visible to all queries currently executed at node L.

Thus, the present invention relates to an improved operation of industrial automation systems, in particular, to providing of operation data in industrial automation systems required for operating a device of an industrial automation system. In particular, a query module or querying mechanism is established in devices 2 of an automation system 1, by use of which queries for obtaining operation data are processed and by use of which at least one data providing device in said automation system, capable of providing the desired operation data, is determined. The present invention enables a flexible and cost-saving operating of industrial automation systems and allows a flexible execution of control mechanisms configured for controlling the industrial automation systems.

While embodiments and applications of this invention have been shown and described above, it should be apparent to those skilled in the art, that many more modifications (than mentioned above) are possible without departing from the inventive concept described herein. Therefore, the invention is not restricted to the appending claims only. The foregoing detailed description has to be regarded as illustrative rather than limiting. Further, it has to be noted that the following claims include all equivalents, which are intended or appropriate to define further embodiments of the present invention. Thus, for example, the modules described by the description can be software and/or hardware modules. Further, several declarative query languages or several ways for defining and processing declarative queries can be used according to the present invention.

### Reference list

- 10: a device in an automation system
- 11: a device in an automation system
- 12: a device in an automation system
- 13: a device in an automation system
- 14: a device in an automation system
- 15: a device in an automation system
- 16: a device in an automation system
- 17: a device in an automation system
- 18: a device in an automation system
- 19: a device in an automation system
- 2,2',2",2"': device configured for use in an automation sysem
- 21: query module
- 22: receiving module
- 23: transmitting module
- 24: data module
- 25: operation data module
- 26: meta data module
- 27: state data module
- 28: operation data deriving module
- 31: processing of a query
- 311: processing of a query with regard to required or requested operation data
- 312: determining of data providing devices
- 32: transmitting of the query to at least one data providing device
- 33: checking step
- 34: transmitting of derived operation data to a requesting device
- 35: checking step
- 36: end

## Claims

**1.** A method for providing operation data in an automation system (1), said method being performed in a device (2) of said automation system (1), and said method comprising:
- processing (311) of a query for obtaining operation data; and
- determining (312) of at least one data providing device (2") in said automation system (1) capable of providing said operation data for said device (2).

**2.** The method according to claim 1, wherein said operation data represent data for operation of said device (2) or said operation data represent data for operation of a requesting device (2') in said automation system (1).

**3.** The method according to at least one of the preceding claims, wherein said data providing device (2'') provides said operation data directly to said device (2).

**4.** The method according to at least one of the preceding claims 1 or 2, wherein said data providing device (2") provides said operation data by transmitting a further query to at least one further device (2"') in said automation system (1) for obtaining said operation data and by receiving said operation data from said at least one further device (2"').

**6.** The method according to at least one of the preceding claims, wherein said device (2) comprises an operation data module (25), said operation data module (25) being configured to manage operation data of said device (2), and wherein said processing of a query comprises processing of said query for obtaining operation data, which is out of date in said operation data module (25).

**7.** The method according to at least one of the preceding claims, wherein said device (2) comprises a meta data module (26), said meta data module (26) being configured to manage meta data of said device (2), and wherein said determining is performed by use of meta data managed by said meta data module (26).

**8.** The method according to at least one of the preceding claims, wherein said device (2) comprises a state data module (27), said state data module (27) being configured to manage state data of said device (2), and wherein said determining is performed by use of state data managed by said state data module (27).

**9.** A computer program product comprising a code, the code being configured to implement a method according to claim 1.

**10.** A data carrier comprising a computer program product according to claim 1.

**11.** A device (2), said device (2) being configured for use in an automation system (1), said device (2) comprising a query module (21), wherein said query module (21) is configured to process a query for obtaining operation data and to determine at least one data providing device (2") in said automation system (1) capable of providing said operation data.

**12.** A data providing device (2"), said data providing device (2 ") being configured for use in an automation system (1), said data providing device (2") comprising operation data deriving module (28), said operation data deriving module (28) being configured to derive operation data by use of a query received at said data providing device (2'') from a requesting device (2) in said automation system (1), said requesting device (2) being a device (2) according to claim 11.
